# EUROPEAN PATENT APPLICATION

(11) **EP 3 944 212 A2**
(43) Date of publication of application: **26.01.2022**
(21) Application number: 21207125.2
(22) Date of filing: 09.11.2021
(51) Int. Cl.: G08G 1/01, G08G 1/095, G08G 1/0962

(54) **METHOD AND APPARATUS OF ASSISTING VEHICLE DRIVING, ELECTRONIC DEVICE AND STORAGE MEDIUM**

(30) Priority: 22.12.2020 CN 202011532447
(71) Applicant: Apollo Intelligent Connectivity (Beijing) Technology Co., Ltd., Beijing 100176 (CN)
(72) Inventor: Liu, Shubin, Beijing (CN); Wang, Bin, Beijing (CN); Ji, Ling, Beijing (CN)
(74) Representative: Hoffmann Eitle

(57) **Abstract**

A method and apparatus of assisting vehicle driving, an electronic device and a storage medium are provided, the method relates to a field of smart transportation, and in particular to vehicle networking, vehicle-road cooperation and assisting driving technologies. The method includes: transmitting driving information for a vehicle; receiving traffic light information associated with the location of the vehicle, wherein the traffic light information includes: a location of a traffic light and a status of the traffic light determined in response to a distance between the vehicle and the traffic light meeting a first condition; calculating scenario data for the traffic light at a current time instant according to the traffic light information received; and presenting the scenario data calculated in response to the distance between the vehicle and the traffic light meeting a second condition.

## Description

### TECHNICAL FIELD

The present disclosure relates to a field of smart transportation technology, and in particular to vehicle networking, vehicle-road coordination and assisting driving technologies. And more specifically, the present disclosure provides a method and an apparatus of assisting vehicle driving, an electronic device and a storage medium.

### BACKGROUND

With the development of cities, urban road transportation is becoming more and more complicated. In a vehicle-mounted scene, a vehicle-road cooperation function is becoming more useful and important.

The vehicle-road cooperation is capable of providing presentations of scenes such as intersections, vehicles and traffic lights on a travelling road while the driver is traveling on the road, so as improve traffic efficiency. In order to improve a scenario experiencing effect of the vehicle-road cooperation, how to improve a success rate of a scenario presentation has become a difficult point.

### SUMMARY

The present disclosure provides a method and an apparatus of assisting vehicle driving, an electronic device, and a storage medium.

According to an aspect of the present disclosure, a method of assisting vehicle driving is provided, and the method includes: transmitting driving information for a vehicle, wherein the driving information includes a location of the vehicle; receiving traffic light information associated with the location of the vehicle, wherein the traffic light information includes: a location of a traffic light and a status of the traffic light determined in response to a distance between the vehicle and the traffic light meeting a first condition; calculating scenario data for the traffic light at a current time instant according to the traffic light information received; and presenting the scenario data calculated in response to the distance between the vehicle and the traffic light meeting a second condition.

According to another aspect of the present disclosure, a method of assisting vehicle driving is provided, and the method includes: receiving driving information for a vehicle, wherein the driving information includes a location of the vehicle; determining a traffic light associated with the location of the vehicle according to the driving information for the vehicle, and calculating a distance between the vehicle and the traffic light; and transmitting a location of the traffic light and a status of the traffic light in response to the distance between the vehicle and the traffic light meeting a first condition.

According to another aspect of the present disclosure, an apparatus of assisting vehicle driving is provided, and the apparatus includes: a first transmission module configured to transmit driving information for a vehicle, wherein the driving information includes a location of the vehicle; a first receiving module configured to receive traffic light information associated with the location of the vehicle, wherein the traffic light information includes: a location of a traffic light and a status of the traffic light determined in response to a distance between the vehicle and the traffic light meeting a first condition; a first calculating module configured to calculate scenario data for the traffic light at a current time instant according to the traffic light information received; and a presenting module configured to present the scenario data calculated in response to the distance between the vehicle and the traffic light meeting a second condition.

According to another aspect of the present disclosure, an apparatus of assisting vehicle driving is provided, and the apparatus includes: a second receiving module configured to receive driving information for a vehicle, wherein the driving information includes a location of the vehicle; a second calculating module configured to determine a traffic light associated with the location of the vehicle according to the driving information for the vehicle, and calculating a distance between the vehicle and the traffic light; and a second transmission module configured to transmit a location of the traffic light and a status of the traffic light in response to the distance between the vehicle and the traffic light meeting a first condition.

According to another aspect of the present disclosure, an electronic device is provided, and the electronic device includes: at least one processor; and a memory communicatively connected to the at least one processor, wherein the memory stores instructions executable by the at least one processor, and the instructions, when executed by the at least one processor, cause the at least one processor to implement the method provided by the present disclosure.

According to another aspect of the present disclosure, a non-transitory computer-readable storage medium having computer instructions stored thereon is provided, wherein the computer instructions, when executed by a computer, cause the computer to implement the method provided by the present disclosure.

According to another aspect of the present disclosure, a computer program product containing a computer program is provided, wherein the computer program, when executed by a processor, causes the processor to implement the method provided by the present disclosure.

It should be understood that, the content described in this section is not intended to indicate key or vital features of the embodiments of the present disclosure, and is not used to limit the range of the present disclosure. Other features of the present disclosure will become easily understood through the following specification.

### BRIEF DESCRIPTION OF THE DRAWINGS

The accompanying drawings are used to better understand the present disclosure, and are not intended to limit the present disclosure, and in the drawings:
FIG. 1 is a schematic diagram of a system architecture that may apply a method and an apparatus of assisting vehicle driving according to an embodiment of the present disclosure;
FIG. 2 is a flowchart of a method of assisting vehicle driving according to an embodiment of the present disclosure;
FIG. 3 is a flowchart of a method of assisting vehicle driving according to another embodiment of the present disclosure;
FIG. 4 is a schematic diagram of a method of assisting vehicle driving according to another embodiment of the present disclosure;
FIG. 5 is a block diagram of an apparatus of assisting vehicle driving according to an embodiment of the present disclosure;
FIG. 6 is a block diagram of an apparatus of assisting vehicle driving according to another embodiment of the present disclosure; and
FIG. 7 is a block diagram of an electronic device applying a method of assisting vehicle driving according to an embodiment of the present disclosure.

### DETAILED DESCRIPTION OF EMBODIMENTS

In the following, the exemplary embodiments of the present disclosure are described with reference to the accompanying drawings, wherein various details of the embodiments of the present disclosure are included to facilitate understanding, and they should be considered as merely exemplary. Therefore, those skilled in the art should note that, various changes and modifications may be made to the embodiments described herein without departing from the scope and the spirit of the present disclosure. Also, for clarity and conciseness, descriptions of well-known structures and functions are omitted in the description below.

V2X (Vehicle to everything, information exchange between vehicle and outside) vehicle-road cooperation technology is a key technology in future smart transportation, which allows a communication between vehicles, a communication between a vehicle and a base station, and a communication between base stations, so as to obtain a series of traffic information such as real-time road conditions, road information, pedestrian information, etc., and perform a scenario presentation on the traffic information to assist vehicle driving, this may improve driving security, reduce congestion, and improve traffic efficiency, etc..

Currently, in a process of driving a vehicle, a client (an on-board device, or a terminal device carried by a driver such as a smart phone, etc.) may acquire current driving information for the vehicle such as location (latitude and longitude) information, vehicle speed and travelling direction, etc. in real-time or periodically, then the driving information may be uploaded to a V2X server in a cloud at a preset time interval (such as 1 s). The V2X server may calculate scenario data according to the driving information, and transmit the calculated scenario data to the on-board device at an appropriate time instant (for example, when the vehicle is about to reach a traffic light). The on-board device may be installed with a map application and a V2X application, the location information of the vehicle may be acquired in real-time through the map application, and the on-board device may upload the acquired driving information such as the location, vehicle speed and travelling direction to the V2X server through the V2X application.

The V2X server may calculate scenario data according to the current location information of the vehicle and traffic light data for the road on which the vehicle is located. The scenario data may include, for example, a real-time status of the traffic light, a red light running pre-warning information, and a green-wave vehicle speed. The real-time status of the traffic light may include countdown seconds of a green light of the traffic light or a red light of the traffic light, the red light running pre-warning information may indicate that the vehicle is at a risk of running the red light at a current speed, and the green-wave vehicle speed may indicate that the vehicle may pass the traffic light intersection at the green-wave vehicle speed when the green light of the traffic light is on. The V2X server may transmit the scenario data to the on-board device when a distance between the vehicle and the traffic light meets a condition (for example, the distance between the vehicle and the traffic light is 500 m), and the scenario data is presented by the V2X application in the on-board device, so as to assist the driver to drive, which may improve driving security and reduce congestion.

The inventor found that, the server calculates the scenario data for the traffic light in real-time, and transmits the scenario data when the distance between the vehicle and the traffic light meets a condition. However, due to a delay in network transmission, if the network channel is congested, it may happen that the driver drives out of the traffic light intersection before the scenario data is transmitted to the client, which causes a failure in scenario presentation. Therefore, the current solution has a large delay and a low success rate of scenario presentation.

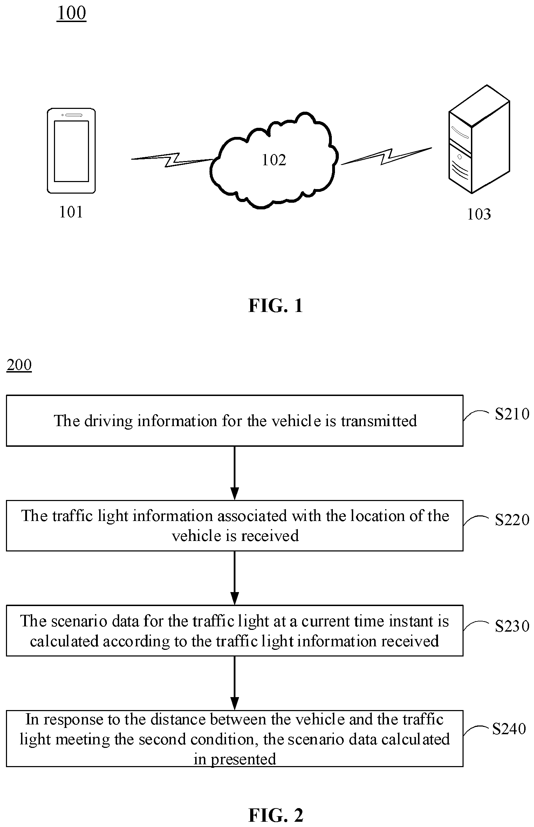

FIG. 1 is a schematic diagram of an exemplary system architecture applying a method and an apparatus of assisting vehicle driving according to an embodiment of the present disclosure. It should be noted that, FIG. 1 merely shows an example of the system architecture that may apply the embodiment of the present disclosure, which may help those skilled in the art understand the technical content of the present disclosure, it does not mean that the embodiment of the present disclosure may not be used in other devices, systems, environments or scenes.

As shown in FIG. 1, the system architecture 100 according to the embodiment may include: a terminal device 101, a network 102, and a server 103. The network 102 may be used as a medium for providing a communication link between the terminal device 101 and the server 103. The network 102 may include various connection types, such as wired and/or wireless communication links, and so on.

The terminal device 101 may be an on-board device, and may also be a smart terminal carried by the driver, such as a mobile phone, a tablet, etc.. The terminal device 101 may acquire driving information for the vehicle, such as location (latitude and longitude) information, vehicle speed and travelling direction, etc. in real-time or periodically. Then, the acquired driving information may be transmitted to the server 103 in real-time or periodically.

The server 103 may be an electronic device with a V2X vehicle-road cooperation function. The server 103 may determine a traffic light on a road on which the vehicle is located according to the driving information transmitted from the terminal device 101, and determine a closest traffic light intersection the vehicle is travelling toward according to a travelling direction of the vehicle. For the traffic light, location and status data of the traffic light may be obtained, and a real-time distance between the vehicle and the traffic light and a real-time status of the traffic light are calculated. Whether the vehicle is at a risk of running the red light at the current speed or not may also be predicted according to the real-time distance, the vehicle speed and the real-time status of the traffic light, to generate a red light running pre-warning information. The green-wave vehicle speed may also be calculated according to the real-time distance, the vehicle speed and the real-time status of the traffic light, so that the vehicle may pass the traffic light at the green-wave vehicle speed when the green light of the traffic light is on.

When the distance between the vehicle and the traffic light is less than a threshold (such as 500 m), the server 103 may transmit the scenario data, such as the status of the traffic light, the red light running pre-warning information and the green-wave vehicle speed, etc. to the terminal device 101. The terminal device 101 may present the scenario data to assist the driver to drive, which may improve driving security and reduce congestion.

FIG. 2 is a flowchart of a method of assisting vehicle driving according to an embodiment of the present disclosure.

As shown in FIG. 2, the method 200 of assisting vehicle driving may include steps S210 to S240.

According to the embodiment of the present disclosure, the steps S210 to S240 may be performed on the client. The client may be an on-board device, and may also be a smart terminal carried by the driver such as a mobile phone, etc..

In step S210, the driving information for the vehicle is transmitted.

According to the embodiment of the present disclosure, the client may acquire the driving information for the vehicle such as the location (latitude and longitude) information, the vehicle speed and the travelling direction, etc. in real-time or periodically. Then, the acquired driving information may be transmitted to the V2X server in real-time or periodically.

In step S220, the traffic light information associated with the location of the vehicle is received.

According to the embodiment of the present disclosure, the traffic light associated with the location of the vehicle indicates that the vehicle is travelling toward the traffic light on a road on which the traffic light is located. The traffic light information may include the location of the traffic light and the status of the traffic light determined in response to the distance between the vehicle and the traffic light meeting a first condition.

According to the embodiment of the present disclosure, the V2X server may receive the driving information transmitted from the client, determine the traffic light associated with the location of the vehicle according to the driving information, and transmit the location (latitude and longitude) of the traffic light and the status (traffic light countdown) of the traffic light in response to the distance between the vehicle and the traffic light meeting the first condition. The first condition may be that the distance between the vehicle and the traffic light is less than a first threshold and greater than a second threshold. The first threshold may be, for example, 1000 m, and the second threshold may be, for example, 500 m.

Specifically, the V2X server may determine a road on which the vehicle is located according to the location of the vehicle, and determine a traffic light in front of the vehicle in a travelling direction of the vehicle as the traffic light associated with the location of the vehicle according to the travelling direction of the vehicle.

It should be understood that the V2X server may calculate a distance between the vehicle and a closest traffic light in the travelling direction of the vehicle in real-time, at a time instant that the distance between the vehicle and the closest traffic light is equal to the first threshold (1000 m), the V2X server may transmit a status of the traffic light and a location of the traffic light at the time instant to the client. Then, the V2X server may monitor a distance between the vehicle and a next traffic light.

In step S230, the scenario data for the traffic light at a current time instant is calculated according to the traffic light information received.

According to the embodiment of the present disclosure, the client may receive the location of the traffic light and the status of the traffic light transmitted from the V2X server, and the status of the traffic light received by the client is a status of the traffic light at the time instant when the distance between the vehicle and the traffic light meets the first condition. Then, a real-time distance between the vehicle and the traffic light may be calculated according to the location of the traffic light, a real-time status of the traffic light may be calculated according to the status of the traffic light at the time instant when the distance between the vehicle and the traffic light meets the first condition. Whether the vehicle is at a risk of running the red light at the current speed or not may be predicted according to the real-time distance, the vehicle speed and the real-time status of the traffic light, to generate a red light running pre-warning information. The green-wave vehicle speed may also be calculated according to the real-time distance, the vehicle speed and the real-time status of the traffic light, so that the vehicle may pass the traffic light at the green-wave vehicle speed when a green light of the traffic light is on. It should be noted that, the status of the traffic light, the red light running pre-warning information, and the green-wave vehicle speed may be calculated in real-time, and may also be calculated periodically.

In step S240, in response to the distance between the vehicle and the traffic light meeting a second condition, the scenario data calculated is presented.

According to the embodiment of the present disclosure, the client may determine whether a positional relationship between the vehicle and the traffic light meets the second condition or not according to the real-time distance between the vehicle and the traffic light. The second condition may be that the distance between the vehicle and the traffic light is less than or equal to the second threshold, and greater than 0 (the vehicle has not driven out of the traffic light intersection), and the first threshold may be, for example, 1000 m, and the second threshold may be, for example, 500 m. In a case that the distance between the vehicle and the traffic light is less than or equal to the second threshold, it means that the vehicle is about to reach the traffic light, and the client will present a scenario data calculated at a current time instant. The scenario data calculated at a current time instant may include at least the current status of the traffic light, the red light running pre-warning information and the green-wave vehicle speed.

According to the embodiment of the present disclosure, the driver's reference to these scenario data may improve driving safety and reduce congestion. For example, the vehicle speed may be adjusted according to the traffic light countdown or the red light running pre-warning information, so as to avoid running the red light. For another example, the vehicle speed may be changed to the green-wave vehicle speed, so that the traffic light may be in a green light status while the vehicle reaches the traffic light, the vehicle may directly pass the traffic light, and the congestion may be reduced.

It should be understood that, in related art, the V2X server calculates the scenario data and transmits the scenario data to the client in response to the distance between the vehicle and the traffic light meeting a condition. The V2X server in the embodiment of the present disclosure transmits the location of the traffic light and the status of the traffic light to the client in advance, the scenario data is calculated by the client, and the calculated scenario data is presented by the client in response to determining that the distance between the vehicle and the traffic light being less than a threshold, so as to avoid a delay in scenario presentation, and improve a success rate of scenario presentation.

According to the embodiment of the present disclosure, the driving information for the vehicle is transmitted, the traffic light information associated with the location of the vehicle is received, the scenario data for the traffic light at a current time instant is calculated according to the received traffic light information, and the calculated scenario data is presented in response to the positional relationship between the vehicle and the traffic light meeting the second condition. In the embodiment of the present disclosure, the scenario data is calculated and presented on the client, which may avoid failure in scenario presentation due to the delay in network transmission, and may improve the success rate of scenario presentation.

According to the embodiment of the present disclosure, the location of the traffic light received by the client may include a location of a stop line for the traffic light. After determining that the vehicle is beyond the stop line for the traffic light, that is, the vehicle has driven out of the traffic light intersection, the scenario data for the traffic light is deleted.

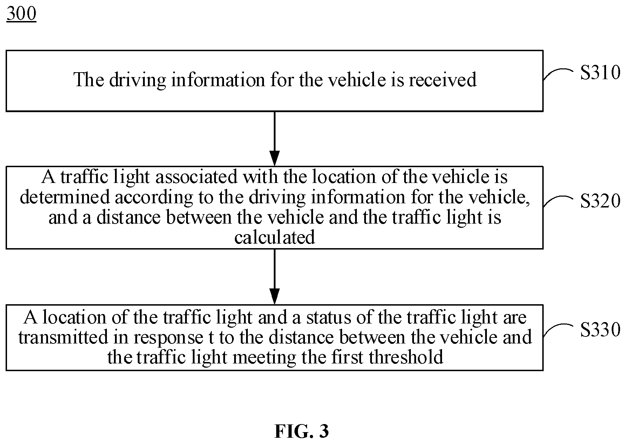

FIG. 3 is a flowchart of a method of assisting vehicle driving according to another embodiment of the present disclosure.

As shown in FIG. 3, the method 300 of assisting vehicle driving may include steps S310 to S330.

According to the embodiment of the present disclosure, the steps S310 to S330 may be performed by a V2X server, and the V2X server is an electronic device capable of providing a vehicle-road cooperation function.

In step S310, the driving information for the vehicle is received.

According to the embodiment of the present disclosure, the V2X server may receive the driving information uploaded from the client in real-time or periodically, and the driving information may include latitude and longitude location information of the vehicle, a vehicle speed and a travelling direction, etc..

In step S320, a traffic light associated with the location of the vehicle is determined according to the driving information for the vehicle, and a distance between the vehicle and the traffic light is calculated.

According to the embodiment of the present disclosure, the traffic light is associated with the location of the vehicle. Specifically, the vehicle is travelling toward the traffic light on a road on which the traffic light is located. The V2X server may determine a road on which the vehicle is located according to the received location of the vehicle, and then determine a traffic light in the travelling direction of the vehicle as the traffic light associated with the location of the vehicle according to the travelling direction of the vehicle.

According to the embodiment of the present disclosure, the V2X server may first calculate a distance between the vehicle and a closest traffic light in the travelling direction of the vehicle in real-time. In response to the calculated distance meeting a condition, for example, the distance being less than or equal to a first threshold (1000 m), a distance between the vehicle and a next traffic light may be calculated.

In step S330, a location of the traffic light and a status of the traffic light are transmitted in response to the distance between the vehicle and the traffic light meeting the first condition.

According to the embodiment of the present disclosure, in response to the distance between the vehicle and the traffic light being less than or equal to the first threshold and greater than a second threshold, the V2X server transmits the location of the traffic light and the status of the traffic light to the client, and the first threshold may be, for example, 1000 m, and the second threshold may be, for example, 500 m.

Specifically, at a time instant that the distance between the vehicle and the traffic light is equal to the first threshold, the V2X server may transmit the status of the traffic light and the location of the traffic light at the time instant to the client. Alternatively, during a time period that the distance between the vehicle and the traffic light is less than or equal to the first threshold and greater than the second threshold, the V2X server may transmit the location of the traffic light and the status of the traffic light periodically. In response to the distance between the vehicle and the traffic light being equal to or less than the second threshold, scenario data is calculated by the client, and the location the traffic light and the status of the traffic light is not transmitted by the V2X server.

It should be understood that, the V2X server may calculate the distance between the vehicle and the closest traffic light in the travelling direction of the vehicle in real-time. At a time instant that the distance between the vehicle and the closest traffic light is equal to the first threshold (1000 m), the V2X server may transmit the location of the traffic light and the status of the traffic light at the time instant to the client. Then, the V2X server may monitor a distance between the vehicle and a next traffic light, and at a time instant that the distance between the vehicle and the next traffic light is equal to the first threshold (1000 m), the V2X server may transmit the location of the next traffic light and the status of the next traffic light at the time instant to the client.

According to the embodiment of the present disclosure, the driving information for the vehicle is received, the traffic light associated with the location of the vehicle is determined according to the driving information for the vehicle, and the distance between the vehicle and the traffic light is calculated. The location of the traffic light and the status of the traffic light are transmitted in response to the distance between the vehicle and the traffic light meeting the first condition. The V2X server in the embodiment of the present disclosure transmits the location of the traffic light and the status of the traffic light in advance, the scenario data is calculated and presented by the client, so as to avoid a delay in scenario presentation, and improve a success rate of scenario presentation.

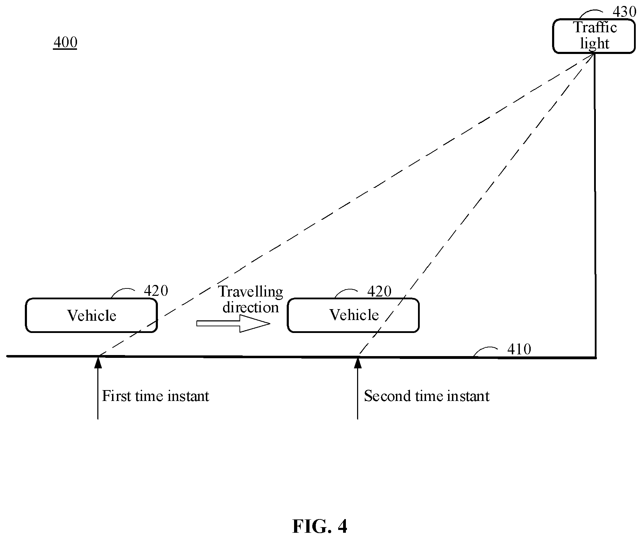

FIG. 4 is a schematic diagram of a method of assisting vehicle driving according to another embodiment of the present disclosure.

As shown in FIG. 4, the schematic diagram 400 of a method of assisting vehicle driving may include a road 410, a vehicle 420 and a traffic light 430. The vehicle 420 indicated at a first time instant and the vehicle 420 indicated at a second time instant in FIG. 4 refer to a same vehicle travelling to different locations.

According to the embodiment of the present disclosure, the vehicle 420 is travelling on the road 410, and the traffic light 430 on the road 410 is in front of the vehicle 420. The vehicle is installed with an on-board device. The on-board device in the vehicle 420 may upload driving information for the vehicle 420 such as a location, a vehicle speed and a travelling direction to a V2X server in real-time, and the V2X server may calculate a distance between the vehicle 420 and the traffic light 430 in real-time, and determine whether the distance between the vehicle 420 and the traffic light 430 meets a first threshold or not. If, at the first time instant, the distance between the vehicle 420 and the traffic light 430 is equal to the first threshold (1000 m), the V2X server may transmit a location of the traffic light and a status (traffic light countdown) of the traffic light at the first time instant to the on-board device in the vehicle 420.

According to the embodiment of the present disclosure, the on-board device in the vehicle 420 may receive the location of the traffic light 430 and the status of the traffic light 430 at the first time instant. And then, a real-time distance between the vehicle 420 and the traffic light 430 may be calculated according to the location of the traffic light. A real-time status of the traffic light 430 may be calculated according to the status of the traffic light 430 at the first time instant. Whether the vehicle 420 is at a risk of running the red light at a current vehicle speed or not is predicted according to the real-time distance, the vehicle speed and the real-time status of the traffic light 430, to generate a red light running pre-warning information. A green-wave vehicle speed may be calculated according to the real-time distance, the vehicle speed and the real-time status of the traffic light, so that the vehicle 420 may pass the traffic light 430 at the green-wave vehicle speed when a green light of the traffic light is on.

According to the embodiment of the present disclosure, the on-board device in the vehicle 420 may calculate the real-time distance between the vehicle 420 and the traffic light 430, while the on-board device may determine whether the distance between the vehicle 420 and the traffic light 430 meets a second threshold (500 m) or not. If, at the second time instant, the distance between the vehicle 420 and the traffic light 430 is equal to the second threshold, the on-board device in the vehicle 420 may present the calculated status of the traffic light 430 at the second time instant, the red light running pre-warning information and the green-wave vehicle speed, so as to assist the driver to drive, thereby improving driving security and reducing congestion.

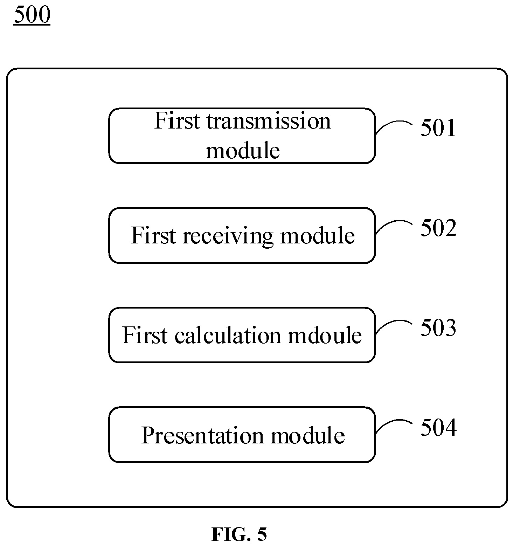

FIG. 5 is a block diagram of an apparatus of assisting vehicle driving according to an embodiment of the present disclosure.

As shown in FIG. 5, the apparatus 500 of assisting vehicle driving may include a first transmission module 501, a first receiving module 502, a first calculation module 503 and a presentation module 504.

The first transmission module 501 is used to transmit driving information for a vehicle, and the driving information may include a location of the vehicle.

The first receiving module 502 is used to receive traffic light information associated with the location of the vehicle, and the traffic light information may include a location of a traffic light and a status of the traffic light determined in response to a distance between the vehicle and the traffic light meeting a first condition.

The first calculation module 503 is used to calculate scenario data for the traffic light at a current time instant according to the received traffic light information.

The presentation module 504 is used to present the calculated scenario data in response to the distance between the vehicle and the traffic light meeting a second condition.

According to the embodiment of the present disclosure, the scenario data may include the status of the traffic light at the current time instant, a red light running pre-warning information and a green-wave vehicle speed.

According to the embodiment of the present disclosure, the first calculation module may include a first calculation unit, a second calculation unit and a third calculation unit.

The first calculation unit is used to calculate the status of the traffic light at the current time instant according to the received status of the traffic light.

The second calculation unit is used to generate the red light running pre-warning information according to the received location of the traffic light, the calculated status of the traffic light at the current time instant and the vehicle speed, and the red light running pre-warning information may indicate a risk of running the red light of the traffic light for the vehicle.

The third calculation unit is used to calculate the green-wave vehicle speed for the traffic light according to the received location of the traffic light, the calculated status of the traffic light at the current time instant and the vehicle speed, so that the vehicle does not run the red light at the green-wave vehicle speed.

According to the embodiment of the present disclosure, the received location of the traffic light may include a location of a stop line for the traffic light. The apparatus 500 of assisting vehicle driving may also include a deletion module.

According to the embodiment of the present disclosure, the deletion module is used to delete the scenario data for the traffic light after determining that the vehicle is beyond the stop line of the traffic light.

According to the embodiment of the present disclosure, the first condition is that the distance between the vehicle and the traffic light less than or equal to a first threshold and greater than a second threshold.

According to the embodiment of the present disclosure, the second condition is that the distance between the vehicle and the traffic light less than or equal to the second threshold and greater than 0.

According to the embodiment of the present disclosure, the driving information may further include a travelling direction of the vehicle.

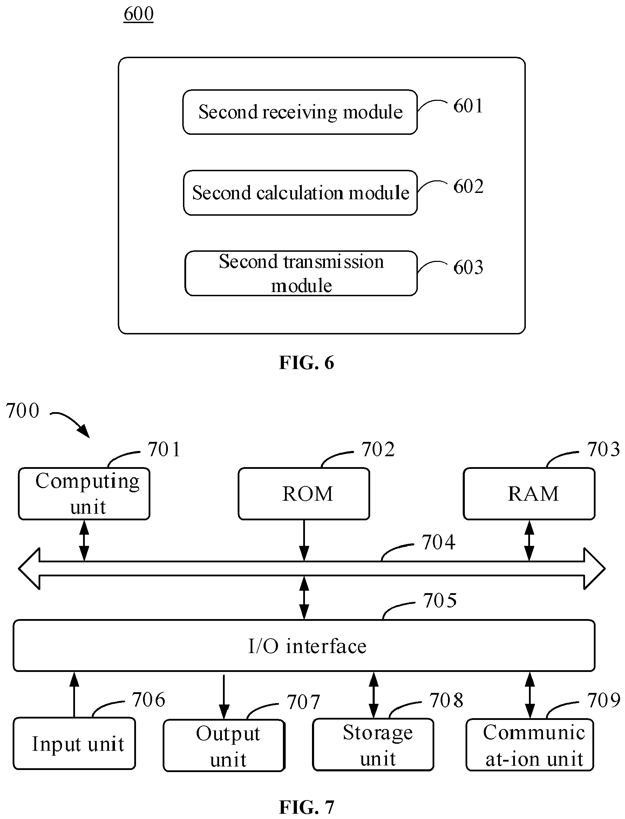

FIG. 6 is a block diagram of an apparatus of assisting vehicle driving according to another embodiment of the present disclosure.

As shown in FIG. 6, the apparatus 600 of assisting vehicle driving may include a second receiving module 601, a second calculation module 602 and a second transmission module 603.

The second receiving module 601 is used to receive driving information for a vehicle, and the driving information may include a location of the vehicle.

The second calculation module 602 is used to determine a traffic light associated with the location of the vehicle, and calculate a distance between the vehicle and the traffic light.

The second transmission module 603 is used to transmit a location of the traffic light and a status of the traffic light in response to the distance between the vehicle and the traffic light meeting a first condition.

According to the embodiment of the present disclosure, the first condition is that the distance between the vehicle and the traffic light is less than or equal to a first threshold and greater than a second threshold.

According to the embodiment of the present disclosure, the driving information may further include a travelling direction of the vehicle. The second calculation module 602 may include a first determination unit and a second determination unit.

The first determination unit is used to determine a road on which the vehicle is travelling according to the location of the vehicle.

The second determination unit is used to determine a traffic light on the road on which the vehicle is currently located in the travelling direction of the vehicle, as the traffic light associated with the location of the vehicle according to the location of the vehicle and the travelling direction of the vehicle.

In the technical solutions of the present disclosure, the acquisition, storage, use, processing, transmission, provision, and disclosure of vehicle information involved are in compliance with relevant laws and regulations, and does not violate public order and good customs.

According to the embodiment of the present disclosure, the present disclosure further provides an electronic device, a readable storage medium and a computer program product.

FIG. 7 illustrates a schematic block diagram of an exemplary electronic device 700 for implementing the embodiments of the present disclosure. The electronic device is intended to represent digital computers of various forms, for example, laptop computers, desktop computers, workstations, personal digital assistants, servers, blade servers, mainframe computers, and other suitable computers. The electronic device may also represent various forms of mobile devices, such as personal digital processing, cellular phones, smart phones, wearable devices, and other similar computing devices. The components, their connections and relationships, and their functions shown herein are merely examples, and are not intended to limit the implementation of the present disclosure described and/or required herein.

As shown in FIG. 7, the device 700 includes a computing unit 701, the computing unit may perform various suitable operations and processing according to computer programs stored in a ROM 702 or computer programs loaded from a storage unit 708 to a RAM 703. In the RAM 703, various programs and date needed for the operation of the device 700 may also be stored. The computing unit 701, ROM 702 and RAM 703 are connected to each other through a bus 704. Input/output (I/O) interface 705 is also connected to the bus 704.

A plurality of components in the device 700 are connected to the I/O interface 705, including: an input unit 706 such as a keyboard, a mouth, etc.; an output unit 707 such as a display of various types, a loudspeaker of various types, etc.; a storage unit 708 such as a disk, an optical disk, etc.; and a communication unit 709 such as a network card, a modem, a wireless communication transceiver, etc.. The communication unit 709 allows the device 700 to exchange information/data with other devices through a computer network such as Internet and/or various telecommunication networks.

The computing unit 701 may be various general-purpose and/or special-purpose processing components with processing and computing capabilities. Some examples of the computing unit 701 include, but are not limited to, a central processing unit (CPU), a graphics processing unit (GPU), various dedicated artificial intelligence (AI) computing chips, various computing units that run machine learning model algorithms, a digital signal processor (DSP), and any appropriate processor, controller, microcontroller, etc. The computing unit 701 performs the various methods and processing described above, for example, the method of assisting vehicle driving. For example, in some embodiments, the method of assisting vehicle driving may be implemented as a computer software program, which is tangibly contained in a machine-readable medium, such as the storage unit 708. In some embodiments, part or all of the computer programs may be loaded and/or installed on the device 700 via the ROM 702 and/or the communication unit 709. When the computer program is loaded onto the RAM 703 and executed by the computing unit 701, one or more steps of the method of assisting vehicle driving described above may be performed. Alternatively, in other embodiments, the computing unit 701 may be configured to perform the method of assisting vehicle driving in any other suitable manner (for example, by means of firmware).

Various implementations of the systems and technologies described above in the present disclosure may be implemented in a digital electronic circuit system, an integrated circuit system, a field programmable gate array (FPGA), an application specific integrated circuit (ASIC), an application-specific standard product (ASSP), a system on chip system (SOC), a load programmable logic device (CPLD), a computer hardware, firmware, software, and/or a combination thereof. These various embodiments may include: being implemented in one or more computer programs, the one or more computer programs may be executed and/or interpreted on a programmable system including at least one programmable processor, the programmable processor may be a dedicated or general-purpose programmable processor that may receive data and instructions from a storage system, at least one input device, and at least one output device, and transmit the data and instructions to the storage system, the at least one input device, and the at least one output device.

The program codes used to implement the method of the present disclosure may be written in any combination of one or more programming languages. These program codes may be provided to processors or controllers of general-purpose computers, special-purpose computers, or other programmable data processing devices, so that when the program codes are executed by the processors or controllers, functions/operations specified in the flowcharts and/or block diagrams are implemented. The program codes may be executed entirely on a machine, partly executed on a machine, partly executed on a machine and partly executed on a remote machine as an independent software package, or entirely executed on a remote machine or a server.

In the context of the present disclosure, a machine-readable medium may be a tangible medium, which may contain or store programs for being used by an instruction execution system, apparatus, or device, or in combination with the instruction execution system, apparatus or device. The machine-readable medium may be a machine-readable signal medium or a machine-readable storage medium. The machine-readable medium may include, but is not limited to, an electronic, magnetic, optical, electromagnetic, infrared, or semiconductor system, device, or apparatus, or any suitable combination of the foregoing. More specific examples of the machine-readable storage medium may include electrical connections based on one or more wires, a portable computer disk, a hard disk, a random access memory (RAM), a read only memory (ROM), an erasable programmable read only memory (EPROM or flash memory), an optical fiber, a portable compact disk read only memory (CD-ROM), an optical storage device, a magnetic storage device, or any suitable combination of the foregoing.

In order to provide interaction with the user, the system and technology described here may be implemented on a computer that has: a display device for displaying information to the user (for example, a CRT (cathode ray tube) or an LCD (liquid crystal display) monitor); and a keyboard and pointing device (for example, a mouse or a trackball) through which the user may provide input to the computer. Other types of devices may also be used to provide interaction with the user; for example, the feedback provided to the user may be sensory feedback of any form (for example, visual feedback, auditory feedback, or tactile feedback); and may receive input from the user in any form (including acoustic input, voice input, or tactile input).

The systems and technologies described here may be implemented in a computing system that includes back-end components (for example, as a data server), or a computing system that includes middleware components (for example, an application server), or a computing system that includes front-end components (for example, a user computer with a graphical user interface or a web browser through which the user may interact with the implementation of the system and technology described herein), or a computing system including any combination of the back-end components, the middleware components, or the front-end components. The components of the system may be connected to each other through digital data communication (for example, communication network) in any form or medium. Examples of the communication networks include: local area network (LAN), wide area network (WAN), and the Internet.

A computer system may include a client and a server. The client and server are generally far away from each other and interact through a communication network. A relationship between the client and the server is generated by running computer programs that have a client-server relationship with each other on corresponding computers.

It should be understood that the various forms of processes shown above may be used to reorder, add or delete steps. For example, the steps described in the present disclosure may be performed in parallel, sequentially, or in a different order, as long as the desired result of the technical solution disclosed in the present disclosure may be achieved, which is not limited herein.

The above-mentioned specific embodiments do not constitute a limitation on the protection scope of the present disclosure. Those skilled in the art should understand that various modifications, combinations, sub-combinations and substitutions may be made according to design requirements and other factors. Any modification, equivalent replacement and improvement made within the present disclosure shall be included in the protection scope of the present disclosure.

## Claims

1. A method (200) of assisting vehicle driving, comprising:
transmitting (S210) driving information for a vehicle, wherein the driving information comprises a location of the vehicle;
receiving (S220) traffic light information associated with the location of the vehicle, wherein the traffic light information comprises: a location of a traffic light and a status of the traffic light determined in response to a distance between the vehicle and the traffic light meeting a first condition;
calculating (S230) scenario data for the traffic light at a current time instant according to the traffic light information received; and
presenting (S240) the scenario data calculated in response to the distance between the vehicle and the traffic light meeting a second condition.

2. The method according to claim 1, wherein the scenario data comprises a status of the traffic light at the current time instant, and the calculating scenario data for the traffic light at a current time instant according to the traffic light information received comprises:
calculating the status of the traffic light at the current time instant according to the status of the traffic light received.

3. The method according to any one of preceding claims, wherein the scenario data further comprises a red light running pre-warning information, and the calculating scenario data for the traffic light at a current time instant according to the traffic light information received further comprises:
generating the red light running pre-warning information according to the location of the traffic light received, the status of the traffic light at the current time instant calculated and a speed of the vehicle, wherein the red light running pre-warning information indicates a risk of running a red light of the traffic light for the vehicle.

4. The method according to any one of preceding claims, wherein the scenario data further comprises a green-wave vehicle speed, and the calculating scenario data for the traffic light at a current time instant according to the traffic light information received further comprises:
calculating the green-wave vehicle speed for the traffic light according to the location of the traffic light received, the status of the traffic light at the current time instant calculated and a speed of the vehicle, so that the vehicle does not run a red light of the traffic light at the green-wave vehicle speed.

5. The method according to any one of preceding claims, wherein the location of the traffic light received comprises a location of a stop line for the traffic light, and the method further comprises:
deleting the scenario data for the traffic light in response to determining that the vehicle is beyond the stop line for the traffic light.

6. The method according to any one of preceding claims, wherein the first condition is the distance between the vehicle and the traffic light being less than a first threshold and greater than a second threshold,
wherein the second condition is the distance between the vehicle and the traffic light being less than or equal to the second threshold, and greater than 0.

7. The method according to any one of preceding claims, wherein the driving information further comprises a travelling direction of the vehicle.

8. A method (300) of assisting vehicle driving, comprising:
receiving (S310) driving information for a vehicle, wherein the driving information comprises a location of the vehicle;
determining (S320) a traffic light associated with the location of the vehicle according to the driving information for the vehicle, and calculating (S320) a distance between the vehicle and the traffic light; and
transmitting (S330) a location of the traffic light and a status of the traffic light in response to the distance between the vehicle and the traffic light meeting a first condition.

9. The method according to claim 8, wherein the first condition is the distance between the vehicle and the traffic light being less than a first threshold and greater than a second threshold.

10. The method according to any one of claims 8 and 9, wherein the driving information further comprises a travelling direction of the vehicle, and the determining a traffic light associated with the location of the vehicle according to the driving information for the vehicle comprises:
determining a road on which the vehicle is currently located according to the location of the vehicle; and
determining a traffic light on the road on which the vehicle is currently located in the travelling direction of the vehicle, as the traffic light associated with the location of the vehicle according to the location of the vehicle and the travelling direction of the vehicle.

11. An apparatus (500) of assisting vehicle driving, comprising:
a first transmission module (501) configured to transmit driving information for a vehicle, wherein the driving information comprises a location of the vehicle;
a first receiving module (502) configured to receive traffic light information associated with the location of the vehicle, wherein the traffic light information comprises: a location of a traffic light and a status of the traffic light determined in response to a distance between the vehicle and the traffic light meeting a first condition;
a first calculation module (503) configured to calculate scenario data for the traffic light at a current time instant according to the traffic light information received; and
a presentation module (504) configured to present the scenario data calculated in response to the distance between the vehicle and the traffic light meeting a second condition.

12. An apparatus (600) of assisting vehicle driving, comprising:
a second receiving module (601) configured to receive driving information for a vehicle, wherein the driving information comprises a location of the vehicle;
a second calculation module (602) configured to determine a traffic light associated with the location of the vehicle according to the driving information for the vehicle, and calculating a distance between the vehicle and the traffic light; and
a second transmission module (603) configured to transmit a location of the traffic light and a status of the traffic light in response to the distance between the vehicle and the traffic light meeting a first condition.

13. An electronic device (700), comprising:
at least one processor; and
a memory communicatively connected to the at least one processor; wherein
the memory stores instructions executable by the at least one processor, and the instructions, when executed by the at least one processor, cause the at least one processor to implement the method according to any one of claims 1 to 10.

14. A non-transitory computer-readable storage medium having computer instructions stored thereon, wherein the computer instructions, when executed by a computer, cause the computer to implement the method according to any one of claims 1 to 10.

15. A computer program product containing a computer program, wherein the computer program, when executed by a processor, causes the processor to implement the method according to any one of claims 1 to 10.
